# EUROPÄISCHE PATENTSCHRIFT

(11) **EP 0 488 309 B1**
(45) Veröffentlichungstag und Bekanntmachung des Hinweises auf die Patenterteilung: **10.05.1995**
(21) Anmeldenummer: 91120428.7
(22) Anmeldetag: 28.11.1991
(51) Int. Cl.: G02B 6/28, B29D 11/00, C03B 37/15

(54) **Verfahren zur Herstellung eines optischen Kopplers für Polymerlichtwellenleiter**
Method for manufacturing an optical coupler for polymer light-guides
Méthode de fabrication d'un coupleur optique pour guides d'ondes lumineuses polymères

(30) Priorität: 29.11.1990 DE 4038018
(43) Veröffentlichungstag der Anmeldung: 03.06.1992
(73) Patentinhaber: HOECHST AKTIENGESELLSCHAFT, 65926 Frankfurt am Main (DE)
(72) Erfinder: Brockmeyer, Andreas, Dr., W-6237 Liederbach (DE); Vowinkel, Hans, W-6093 Flörsheim (DE); Groh, Werner, Dr., W-6302 Lich (DE); Stehlin, Thomas, Dr., W-6238 Hofheim am Taunus (DE); Theis, Jürgen, Dr., W-6370 Oberursel (DE)

(56) Entgegenhaltungen:
- EP-A- 0 315 874
- EP-A- 0 439 125
- WO-A-89/02608
- WO-A-90/11540
- US-A- 4 212 512
- PATENT ABSTRACTS OF JAPAN vol. 5, no. 52 (P-56) 11. April 1981 ; & JP-A-56 008 106

## Beschreibung

In passiven Lichtwellenleiternetzen dienen Koppler als optische Bauelemente zum Aufteilen der Lichtsignale von ankommenden Lichtwellenleitern auf abgehende Lichtwellenleiter. Derartige Koppler bestehen aus einem transparenten Körper, welcher an der Lichteintritts- und an der Lichtaustrittsseite mit Lichtwellenleitern verbunden ist. Neben den Kopplern, die durch Zusammenkleben oder Zusammenschmelzen von transparenten Formkörpern mit Lichtwellenleitern entstehen, sind auch Koppler bekannt, zu deren Herstellung Lichtwellenleiterbündel verdrillt und an der Verdrillstelle verstreckt werden (vgl. Agarwal, Fiber Integr. Optics 6 (1), 27-53, 1987).

Die Herstellung derartiger zusammengesetzter Koppler ist aufwendig und teuer; ferner kommt noch hinzu, daß die Durchgangsdämpfung solcher bekannten Koppler schwer reproduzierbar ist, so daß die Leistung zwischen den verschiedenen Ausgangsfasern um mehr als 2 dB schwankt.

Koppler, bei denen Faserbündel aus Polymerlichtwellenleitern mittels eines Schrumpfschlauches verschmolzen sind, (DE-A-37 37 930) oder Lichtwellenleiter, die an die Stirnfläche eines zylindrischen Mischbereiches angesetzt sind (R.D. Codd, SAE/IEEE, International Congress of Transportation Electronics, 1984), sind ebenfalls bekannt.

Ein weiteres Verfahren zur Herstellung von optischen Kopplern wird in der nicht vorveröffentlichten DE-A-40 13 307 beschrieben. Hier werden die Lichtwellenleiter mit Hilfe eines Kunststoffröhrchens gebündelt, und dieses wird in einem darauffolgenden Schritt mit einem Kunststoffschrumpfschlauch umgeben. Bei erhöhter Temperatur verschmelzen die Fasern mit dem Kunststoffröhrchen durch den Druck und die Hitzeeinwirkung des Schrumpfschlauchs. Die Aufheizung erfolgt in diesem Fall mittels einer elektrischen Widerstandsheizung, wobei die Verschweißzeiten im Mittel 0,5 bis 1 Stunde betragen.

Der wesentliche Nachteil der bekannten Herstellungsverfahren besteht in den aufwendigen und zeitintensiven Prozeßschritten, die daher nur eine relativ teure Einzelstückfertigung erlauben.

Die Aufgabe bestand darin, ein Verfahren zu finden, daß es erlaubt, mechanisch stabile Koppler einfach und kostengünstig und mit einem relativ geringen Zeitaufwand herzustellen. Ein solches Verfahren sollte kontrolliert durchführbar sein, so daß es möglich ist, Koppler mit niedrigen Ausgangsdämpfungen und geringen Schwankungen der Leistungen zwischen den Ausgangsfasern zu produzieren.

Die vorliegende Erfindung, welche in den Ansprüchen definiert ist, löst diese Aufgabe. Sie betrifft ein Verfahren zur Herstellung eines Kopplers aus polymeren optischen Fasern (Polymerlichtwellenleiter), wobei die Fasern über die Länge des Mischbereiches miteinander verschweißt werden.

Für das erfindungsgemäße Verfahren werden zwei bis 10⁵, vorzugsweise 2 bis 1000 Polymerlichtwellenleiter gleichsinnig geordnet, gegebenenfalls miteinander verdrillt, und gebündelt. Nach einer Erwärmung der Fasern auf eine Temperatur von 50 bis 250°C über eine Zeitdauer von 0,2 bis 3 Stunden werden diese mit Hilfe von Ultraschall miteinander verschweißt. Bei dem Ultraschallverfahren handelt es sich um ein nicht zerstörungsfreies Schweißverfahren. Ein Verschweißen ohne ein vorheriges Erwärmen der zu verschweißenden Kunststoffteile würde insbesondere bei harten, spröden Materialien zu deren Zerstörung führen. Erst eine vorherige Erwärmung auf eine definierte Temperatur, bei der das Fasermaterial noch keine Veränderung erfährt, ermöglicht eine zerstörungsfreie Verschmelzung der Lichtwellenleiter miteinander.

Bei dem erfindungsgemäßen Verfahren werden die polymeroptischen Fasern 0,2 bis 3 Stunden, vorzugsweise 5 bis 30 Minuten, bei einer Temperatur von 50 bis 250°C, vorzugsweise 130 bis 150°C, gehalten und anschließend in einer Ultraschallschweißanlage bei einer Frequenz im Bereich von 10 bis 60 kHz, vorzugsweise bei 20 bis 40 kHz, miteinander verschweißt. Der verwendete Anlagendruck liegt bei dem erfindungsgemäßen Verfahren im Bereich von 1 bis 10 bar, vorzugsweise im Bereich von 2 bis 4 bar. Die Verschweißzeiten betragen 0,1 bis 3 Sekunden, vorzugsweise 0,1 bis 1,5 Sekunden. Die Haltezeiten liegen im Bereich von 0,1 bis 10 Sekunden, vorzugsweise bei 0,1 bis 5 Sekunden. Unter Haltezeiten versteht man in diesem Fall die Zeiten nach der Verschweißung, in denen die Sonotrode (1) die Fasern, welche sich auf bzw. in der Sonotrodenarbeitsfläche (4) befinden, unter Druck noch umschließt.

Die Haltezeiten entsprechen mindestens den Verschweißzeiten, werden aber bevorzugt etwas länger als diese gewählt. Da das Fasermaterial unter Druck erwärmt wird und durch die Ultraschalleinwirkung zusätzliche Reibungskräfte auftreten (Grenzflächenreibung, innere Reibung der Makromoleküle), können die auftretenden Spannungen auf diese Weise noch ausgeglichen werden.

Die Schwingweiten der Sonotroden (1) liegen bei dem erfindungsgemäßen Verfahren in einem Bereich von 10 bis 65 »m, vorzugsweise von 20 bis 50 »m, und sind allgemein werkstoffspezifisch.

Die Dauer der Vorwärmzeiten ist abhängig von der Temperatur.

Bei kürzeren Vorwärmzeiten wird vorzugsweise bei höheren Temperaturen gearbeitet. Die jeweils angewendeten Temperaturen sind ferner abhängig von den Fasermaterialien und werden bei empfindlicheren Materialien, die im oberen Temperaturbereich möglicherweise eine Zersetzung bzw. Zerstörung erfahren könnten, niedriger gewählt als bei robusteren Materialien.

In einem bevorzugten Fall werden die Fasern vor dem Vorwärmen 5 bis 30 Stunden im Vakuum bei Temperaturen im Bereich von 40 bis 100°C getrocknet. Diese Vortrocknung dient hauptsächlich dazu, möglicherweise noch vorhandenes Restmonomer sowie Spuren von Feuchtigkeit, die sich insbesondere bei längerer Lagerung in den Fasern ansammeln kann, zu beseitigen und somit einer eventuell auftretenden Blasenbildung vorzubeugen. Bei frisch gesponnenen Fasern kann eine derartige Vortrocknung unterbleiben.

Durch eine beidseitige Beschallung der Fügezone ist es möglich, die Verschweißzeiten noch weiter zu verkürzen, was zu sehr homogenen Verschweißungen führt.

Die zu verschweißenden Fasern können bei dem erfindungsgemäßen Verfahren in dem zu verschweißenden Bereich sowohl aus Kern- und Mantelmaterial als auch nur aus Kernmaterial bestehen. Bei einer vorherigen Entfernung des optischen Mantels ist es zweckmäßig, den Mischbereich nach dem Verschweißprozess wieder mit einem optischen Mantel zu umgeben. Eine Möglichkeit besteht darin, über diesen Bereich einen Schrumpfschlauch zu ziehen. Um die Funktion eines optischen Mantels zu übernehmen, muß dieser einen niedrigeren Brechungsindex als die Fasern aufweisen.

Ein für das erfindungsgemäße Verfahren geeigneter Schrumpfschlauch besteht beispielsweise aus einem Polyolefin, Polyvinylchlorid, Polyvinylidenchlorid, Polytetrafluorethylen, Polychloropren, Vinylidenfluorid-Hexafluorpropylen-Copolymer, Silikonkautschuk, Polyester, fluoriertem Ethylen-Propylen-Copolymer oder aus einem Polyfluoralkoxycopolymer.

In einer anderen bevorzugten Ausführungsform wird der Mischbereich anschließend zu seinem Schutz mit einem Lack überzogen, der vorzugsweise einen niedrigeren Brechungsindex als das Kernmaterial aufweist und so ebenfalls als optischer Mantel für den Mischbereich dienen kann.

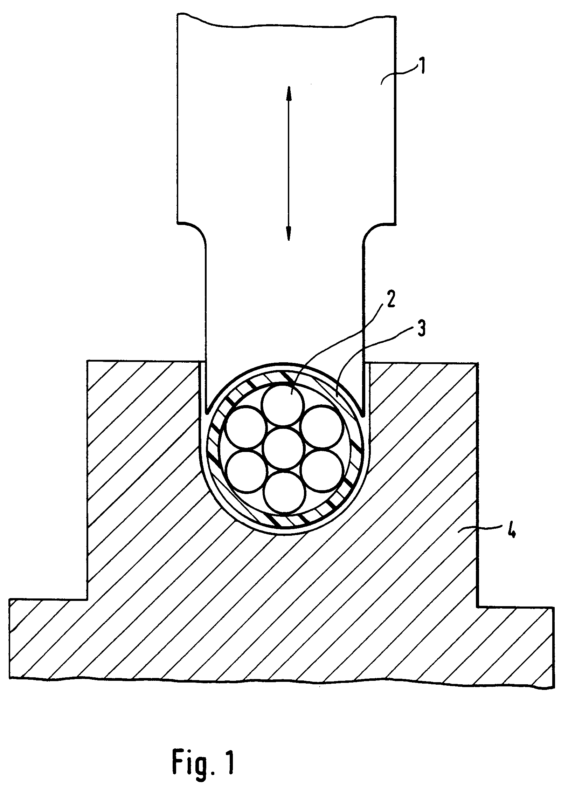

In einer weiteren Ausführungsform können die polymeroptischen Fasern (2) über die Länge des Mischbereiches mit einem Kunststoffröhrchen (3) umgeben sein (Abb. 1), über welches nach dem Verschweißprozeß gegebenenfalls noch ein Schrumpfschlauch geschoben wird. Das Kunststoffröhrchen (3) hat die Aufgabe, bei dem Verschweißprozeß mit den Fasern zu verschmelzen, diese gleichmäßig zu umgeben und möglicherweise auftretende Hohlräume zwischen den Fasern auszufüllen, was es ermöglicht, die Dämpfung derartig hergestellter Koppler noch weiter zu reduzieren.
Auf diese Weise ist es möglich, eine sehr gute flächenmäßige Anpassung des Faserbündels an den Mischbereich zu erzielen. Flächenverluste treten hierbei nicht auf.

Das Röhrchen verleiht dem Mischbereich eine hohe mechanische Stabilität und schützt diesen ferner vor klimatischen Einflüssen.

Es ist sinnvoll, das Material des Kunststoffröhrchens so auszuwählen, daß dessen Brechungsindex aus den oben angeführten Gründen unter dem des Kernmaterials der Fasern liegt, so daß dieses zusätzlich die Funktion des optischen Mantels übernimmt. Geeignete Materialien für derartige Kunststoffröhrchen (3) sind alle hochtransparenten Polymere, deren Brechungsindex kleiner ist als der Brechungsindex des Faserkerns, beispielsweise Polymethylmethacrylat (PMMA), Polycarbonat (PC), Poly-4-methylpenten oder fluorhaltige Polymere.

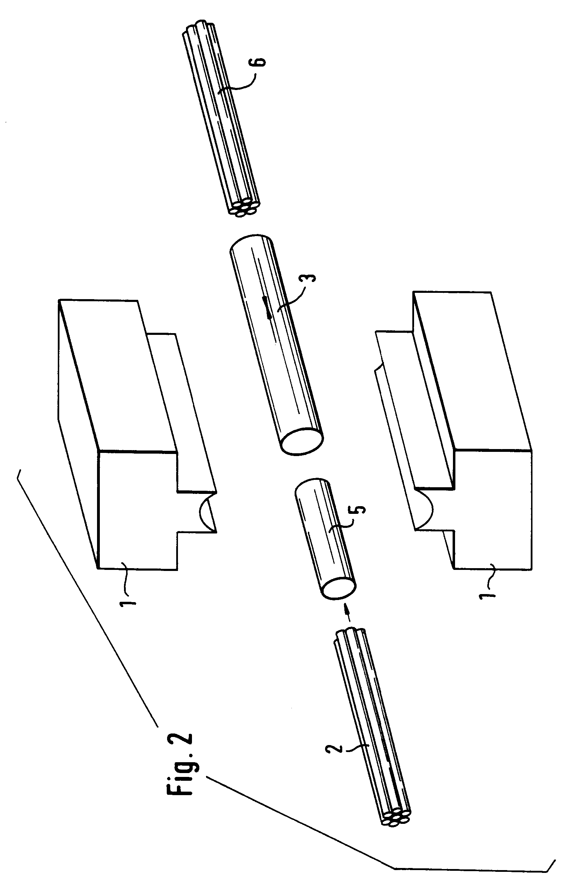

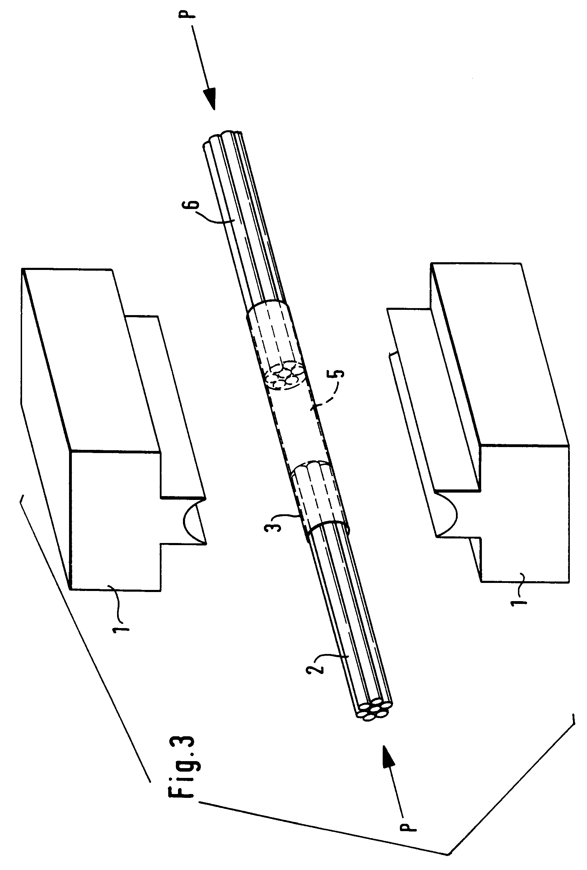

In einer weiteren Ausführungsform ist es möglich 2 bis 10⁵ Fasern (6) direkt mit einem sogenannten Mischerstab (5) zu verschweißen (Ultraschall-Schweißpressen, Abb. 2 und 3). Der Mischerstab (5) besteht hierbei aus einem Material, das den gleichen Brechungsindex wie das Kernmaterial der Fasern aufweist, vorzugsweise aus dem gleichen Material. Häufig verwendete Kernmaterialien sind beispielsweise Polymethylmethacrylat und Polycarbonat.

Zur Herstellung eines derartigen Kopplers wird der Mischerstab (5) in ein Kunststoffröhrchen (3) eingeschoben und in der Mitte des Röhrchens zentriert. Die mit dem Mischerstab zu verschweißenden Fasern (6) werden gebündelt und ebenfalls in das Röhrchen eingeführt und an den Stab angesetzt. Durch Einwirkung von Ultraschall und Druck kommt es zur Verschmelzung der Fasern mit dem Mischbereich. Dieses Verfahren bietet den Vorteil, daß die Fasern vor dem Verschweißprozeß nicht von dem Mantelmaterial befreit werden müssen, und daß bei einem derartigen Koppler keine Steckverbindungen, die stark zur Erhöhung der Dämpfungswerte beitragen, gebraucht werden.

Das erfindungsgemäße Ultraschallschweißverfahren ist für alle Polymerlichtwellenleiter mit und ohne optischen Mantel geeignet. Dabei werden für Koppler für die Übertragung von Datenlichtsignalen vorzugsweise Lichtwellenleiter ohne optischen Mantel an der Verbindungsstelle, für Faserbündel für Beleuchtungszwecke vorzugsweise solche mit Mantel verwendet.

Die Ultraschallschweißtechnik ermöglicht es, mit sehr kurzen Verschweißzeiten zu arbeiten, welche unter optimalen Versuchsbedingungen auf weit unter eine Sekunde abgesenkt werden können. Mit dem erfindungsgemäßen Verfahren ist es möglich, Koppler mit einem sehr homogen aufgebauten Mischbereich auf einfache, kostengünstige und zeitsparende Weise herzustellen.

### Beispiel 1

Bei sieben 0,4 m langen Kunststofflichtwellenleitern aus Polycarbonat, mit einem Durchmesser von jeweils 1 mm, wurde in einem Bereich von 3 cm der optische Mantel mittels Benzin entfernt. Anschließend wurde über diesen Bereich ein PMMA-Röhrchen (nₖ = 1,49) geschoben. Der Brechungsindex der Fasern betrug nₖ = 1,58. Das PMMA-Röhrchen hatte einen Innendurchmesser von 3 mm, eine Wandstärke von 1 mm und eine Länge von 3 cm.

Auf einer kommerziell erhältlichen, in der Polymer- und Keramikverarbeitung bekannten, Ultraschallschweißanlage wurden durch Einwirkung von Ultraschall mit einer Frequenz von 20 kHz die sieben Fasern mit dem PMMA-Röhrchen homogen verschweißt.

Durch Erwärmung der Fügeteile (Lichtwellenleiterbündel/PMMA-Röhrchen) auf eine Temperatur von 130 bis 150°C konnten diese zerstörungsfrei miteinander verschweißt werden. Zur Vermeidung von Blasenbildung wurden die verwendeten Fasern vor der Erwärmung 24 Stunden unter Vakuum bei 80°C getrocknet.

Die Ultraschallschweißanlage hatte eine Generatorleistung von 2 kW. Die Sonotrodenschwingweite (Spitze-Spitze) lag im Bereich von 30 bis 50 »m. Der Anlagendruck lag bei 2 bis 4 bar.

Die Verschweißzeit betrug, bei einer Haltezeit von 3 Sekunden, 0,3 Sekunden.

Gleich gute Ergebnisse wurden mit vorgewärmten Fügeteilen auch bei höheren Ultraschallfrequenzen (30 bis 40 kHz) erzielt. Zur Erzielung einer guten Verschweißung über dem Mischbereich, wurde die Sonotrodenarbeitsfläche (4) mit einem PMMA-Rohr (3), in welches anschließend die Fasern eingeführt werden, ausgelegt. Die Abbildung 1 verdeutlicht diese Werkzeuganordnung.

Der im Transmissionsmischer hergestellte 7 x 7 Sternkoppler hatte einen Excessverlust von 2,4 dB bei einer Leistungsschwankung zwischen beliebigen Ausgangsfasern von maximal 1,6 dB.

### Beispiel 2

Zur Vermeidung des Abisolierprozesses (gemäß Beispiel 1) wurde die zu verschweißende Anordnung etwas abgeändert. Zunächst wurden mittels eines Schrumpfschlauches jeweils sieben Polycarbonatfasern (Durchmesser 1 mm) so gebündelt, daß auf einer Seite 1 cm Fasern und auf der gegenüberliegenden Seite des Schrumpfschlauches 8 cm Fasern nicht vom Schrumpfschlauch abgedeckt waren. Der Schrumpfschlauch hatte eine Länge von 40 mm.

In ein PMMA-Röhrchen (Innendurchmesser 3 mm, Wandstärke 1 mm) mit einer Länge von 50 mm wurde dann ein Polycarbonatstab (Durchmesser 2,9 mm, Länge 30 mm), dessen Enden poliert waren, hineingeschoben. Von beiden Seiten des Röhrchens wurde dann jeweils ein Faserbündel, bestehend aus je 7 Einzelfasern, in das Röhrchen eingeführt, so daß der Polycarbonatstab zentriert lag. Analog zu Beispiel 1 wurde diese Anordnung ebenfalls mittels Ultraschall verschweißt.

Durch Einwirkung von Druck und Ultraschall kann es zu einer guten Verschmelzung zwischen dem Faserbündel und dem Mischerstab. Ferner entstand eine gute flächenmäßige Anpassung von Mischbereich und Faserbündel.

Die Einfügedämpfung, gemittelt über alle Ein- und Ausgangskanäle, lag bei 11,5 dB, woraus sich ein Excessverlust von etwa 3,1 dB errechnet. Die Abweichung zwischen den Ausgangsfasern lag bei 2 dB.

## Patentansprüche

1. Verfahren zur Herstellung eines optischen Kopplers mit folgenden Schritten: gleichsinniges Ordnen und Bündeln von Polymer licht wellen leiter Fasern und Verbinden derselben in einem Koppelbereich, dadurch gekennzeichnet, daß die Fasern auf eine Temperatur von 50 bis 250°C über eine Zeitdauer von 0,2 bis 3 Stunden erwärmt werden und daß sie anschließend mit Hilfe von Ultraschall im Koppelbereich verschweißt werden.

2. Verfahren nach Anspruch 1, dadurch gekennzeichnet, daß die Fasern über den zu verschweißenden Bereich nur aus Kernmaterial bestehen.

3. Verfahren zur Herstellung eines optischen Kopplers, dadurch gekennzeichnet, daß ein Mischerstab, der aus einem Material besteht, das den gleichen Brechungsindex wie das Kernmaterial von Polymer licht wellen leiter Fasern aufweist, in ein Kunststoffröhrchen eingeführt und in der Mitte zentriert wird, daß die Enden von 2 bis 10⁵ Polymer licht wellen leiter Fasern in das Röhrchen eingeführt und mit einer Endfläche des Mischerstabs in Berührung gebracht werden, daß die Fasern vor dem Verschweißvorgang 0,2 bis 3 Stunden auf eine Temperatur im Bereich von 50 bis 250°C erhitzt werden, und daß das Kunststoffröhrchen, der Mischerstab und das Faserbündelende unter der Einwirkung von Ultraschall miteinander verschweißt werden.

4. Verfahren nach Anspruch 1 und 3, dadurch gekennzeichnet, daß über die Fasern ein Kunststoffröhrchen geschoben wird, welches während des Verschweißvorganges mit den Fasern zu einer Einheit verschmilzt.

5. Verfahren nach Anspruch 4, dadurch gekennzeichnet, daß das Kunststoffröhrchen einen niedrigeren Brechungsindex als das Kernmaterial der polymeren optischen Fasern besitzt.

6. Verfahren nach Anspruch 4, dadurch gekennzeichnet, daß das Kunststoffröhrchen aus einem Polymethylmethacrylat, einem Polycarbonat, einem Poly-4-methylpenten oder aus einem fluorierten Polymer besteht.

7. Verfahren nach Anspruch 4, dadurch gekennzeichnet, daß das Kunststoffröhrchen nach dem Verschweißprozeß mit einem Schrumpfschlauch umgeben wird.

8. Verfahren nach Anspruch 1 und 3, dadurch gekennzeichnet, daß der Verschweißprozeß unter einem Druck im Bereich von 1 bis 10 bar, vorzugsweise im Bereich von 2 bis 4 bar, stattfindet.

9. Verfahren nach Anspruch 1 und 3, dadurch gekennzeichnet, daß die Fasern bei einer Frequenz im Bereich von 10 bis 60 kHz, vorzugsweise im Bereich von 20 bis 40 kHz, verschweißt werden.

10. Verfahren nach Anspruch 1 und 3, dadurch gekennzeichnet, daß die Verschweißzeiten im Bereich von 0,1 bis 3 Sekunden, vorzugsweise im Bereich von 0,1 bis 1,5 Sekunden, und die Haltezeiten im Bereich von 0,1 bis 10 Sekunden, vorzugsweise im Bereich von 0,1 bis 5 Sekunden, liegen.

## Claims

1. A process for the production of an optical coupler comprising the following steps: arranging and bundling polymeric optical fibers in the same direction and connecting them in a coupling zone, which comprises warming the fibers to a temperature of from 50 to 250°C for a period of from 0.2 to 3 hours and subsequently welding them with the aid of ultrasound in the coupling zone.

2. The process as claimed in claim 1, wherein the fibers only comprise core material over the region to be welded.

3. A process for the production of an optical coupler, which comprises inserting a connector bar which comprises a material which has the same refractive index as the core material of polymeric optical fibers into a plastic tube and centering the connector bar in the middle, inserting the ends of from 2 to 10⁵ polymeric optical fibers into the tube and bringing them into contact with an end face of the connector bar, heating the fibers, before the welding operation, to a temperature within the range from 50 to 250°C for from 0.2 to 3 hours, and welding the plastic tube, the connector bar and the fiber bundle end to one another under the action of ultrasound.

4. The process as claimed in claim 1 or 3, wherein a plastic tube which melts with the fibers during the welding operation to form a unit is pushed over the fibers.

5. The process as claimed in claim 4, wherein the plastic tube has a lower refractive index than the core material of the polymeric optical fibers.

6. The process as claimed in claim 4, wherein the plastic tube comprises a polymethyl methacrylate, a polycarbonate, a poly-4-methylpentene or a fluorinated polymer.

7. The process as claimed in claim 4, wherein the plastic tube is enveloped with a shrinkable sleeve after the welding process.

8. The process as claimed in claim 1 or 3, wherein the welding process is carried out at a pressure in the range from 1 to 10 bar, preferably in the range from 2 to 4 bar.

9. The process as claimed in claim 1 or 3, wherein the fibers are welded at a frequency in the range from 10 to 60 kHz, preferably in the range from 20 to 40 kHz.

10. The process as claimed in claim 1 or 3, wherein the welding time is in the range from 0.1 to 3 seconds, preferably in the range from 0.1 to 1.5 seconds, and the hold time is in the range from 0.1 to 10 seconds, preferably in the range from 0.1 to 5 seconds.

## Revendications

1. Méthode de fabrication d'un coupleur optique comportant les étapes suivantes consistant à ordonner dans le même sens et à mettre en faisceau des fibres de guides d'ondes lumineuses polymères et à les relier dans une zone de couplage, caractérisée en ce que les fibres sont chauffées à une température de 50 à 250°C pendant une durée de 0,2 à 3 heures et en ce qu'ensuite, à l'aide d'ultrasons, elles sont soudées dans la zone de couplage.

2. Méthode selon la revendication 1, caractérisée en ce que les fibres, sur la partie à souder, ne se composent que de matière nucléaire.

3. Méthode pour fabriquer un coupleur optique, caractérisée en ce qu'une barre de mixage, qui se compose d'une matière qui présente le même indice de réfraction que celui de la matière nucléaire des fibres de guides d'ondes lumineuses polymères, est introduite dans un petit tube en matière synthétique et centrée au milieu, en ce que les extrémités de 2 à 10⁵ fibres de guides d'ondes lumineuses polymères sont introduites dans le petit tube et sont mises en contact avec une surface d'extrémité de la barre de mixage, en ce que les fibres sont chauffées pendant 0,2 à 3 heures à une température comprise entre 50 et 250°C, avant le processus de soudage, et en ce que le petit tube en matière synthétique, la barre de mixage et l'extrémité du faisceau de fibres sont soudés ensemble sous l'effet des ultrasons.

4. Méthode selon la revendication 1 et 3, caractérisée en ce qu'un petit tube en matière synthétique est glissé sur les fibres, lequel, pendant le processus de soudage, fond avec les fibres pour former une unité.

5. Méthode selon la revendication 4, caractérisée en ce que le petit tube en matière synthétique possède un indice de réfraction plus petit que celui de la matière nucléaire des fibres optiques polymères.

6. Méthode selon la revendication 4 caractérisée en ce que le petit tube en matière synthétique se compose d'un polyméthacrylate de méthyle, d'un polycarbonate, d'un polypentène de méthylène 4 ou d'un polymère fluoré.

7. Méthode selon la revendication 4, caractérisée en ce que le petit tube en matière synthétique est enveloppé d'une gaine thermorétractable après le processus de soudage.

8. Méthode selon la revendication 1 et 3, caractérisée en ce que le processus de soudage se fait sous une pression comprise entre 1 et 10 bars, de préférence entre 2 et 4 bars.

9. Méthode selon la revendication 1 et 3, caractérisée en ce que les fibres sont soudées à une fréquence située dans une gamme de 10 à 60 kHz, de préférence dans une gamme de 20 à 40 kHz.

10. Méthode selon la revendication 1 et 3, caractérisée en ce que les temps de soudage se situent dans une fourchette de 0,1 à 3 secondes, de préférence dans une fourchette de 1,1 à 1,5 secondes, et les temps de maintien se situent dans une fourchette de 0,1 à 10 secondes, de préférence dans une fourchette de 0,1 à 5 secondes.
